# EUROPEAN PATENT SPECIFICATION

(11) **EP 3 547 571 B1**
(45) Date of publication and mention of the grant of the patent: **17.02.2021**
(21) Application number: 18305349.5
(22) Date of filing: 28.03.2018
(51) Int. Cl.: H04B 10/50, H04B 10/556, H04J 14/02, H04J 14/06

(54) **ULTRA COMPACT OPTICAL TRANSMITTER**
ULTRAKOMPAKTER OPTISCHER SENDER
ÉMETTEUR OPTIQUE ULTRA COMPACT

(43) Date of publication of application: 02.10.2019
(73) Proprietor: Nokia Solutions and Networks Oy, 02610 Espoo (FI)
(72) Inventor: VEROLET, Théo, 91120 PALAISEAU (FR); SHEN, Alexandre, 91400 ORSAY (FR)
(74) Representative: Novagraaf Technologies

(56) References cited:
- US-A1- 2016 261 439
- US-B1- 8 588 556

## Description

### Technical Field

Various example embodiments relate to ultra compact optical transmitters and more particularly but not exclusively to phase shift keying devices.

### Background

Data traffic is now being driven by a significantly increasing number of connected devices. These devices have outnumbered connected people since the end of 2017. Moreover, the data traffic growth is reinforced by the emergence of the industry 4.0 (robotics, Artificial Intelligence), and by the new distribution of data centers (DC), which are now closer to the users to support 5G applications. This situation is completely changing the requirements of the network in a near future: capacity is shifted from backbone to metro areas. Thus more dynamic and more cost effective cloud networks are needed. Therefore, the system requirements of Wavelength Division Multiplexing (WDM) transmitters are: lower price, less power consumption, larger capacities and capability to adapt their functionality to the network segments.

Quadrature amplitude or phase modulation formats likes QPSK (Quadrature Phase Shift Keying), QAM-16, QAM-64 or QAM-256 (Quadrature Amplitude Modulation with 16, 64 or 256 constellation points, respectively corresponding to 4, 6 and 8 encoded bits per symbol) are now being used in telecom, and optical transmitters (Tx) using these advanced formats are being deployed in high latency resilient networks, such as backhaul, inter-datacenter or long haul networks. Photonic optical transmitter manufacturers are trying to integrate these amplitude or phase modulation formats on small chipsets to get more compact packages, so as to decrease costs.

US 8 588 556 B1 discloses a wavelength division multiplexed quadrature-amplitude modulation optical transmitter and EP3 065 315 A1 discloses a multi-level quadrature amplitude modulation optical transmitter.

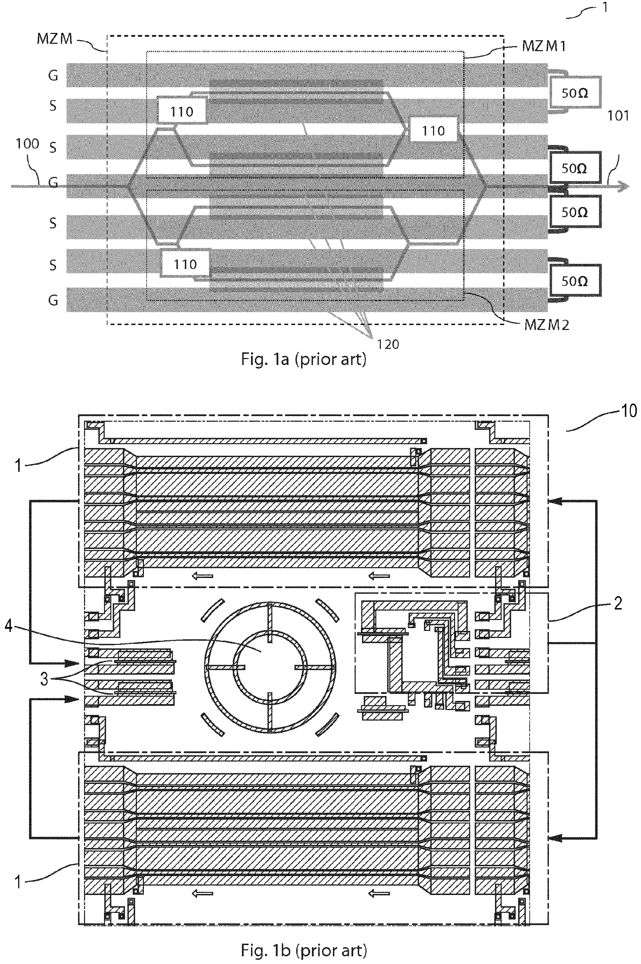

**Figure 1a** represents a QPSK modulator 1 comprising:
- an input 100 configured to receive an optical signal having only one wavelength λ;
- a principal Mach-Zehnder Modulator MZM having two main arms and on each main arm a secondary Mach-Zehnder Modulators MZM1 or MZM2, each secondary Mach-Zehnder Modulators MZM1 and MZM2 having two secondary arms;
- three prefixed optical phase shifters 110;
- four p-i-n carrier depletion zones 120; and
- an output 101.

The principal Mach-Zehnder Modulator MZM is configured to receive the optical signal and to divide it into two similar signals as well as the secondary Mach-Zehnder Modulators MZM1 and MZM2. Thus, the incoming optical signal is divided into four similar sub-signals.

The three prefixed optical phase shifter 110 are located in the different paths of the principal and secondary Mach-Zehnder Modulators MZM, MZM1 and MZM2, and configured so that each sub-signals can get a different phase from each other.

Each p-i-n carrier depletion zone 120 is configured to modulate one of the sub-signal indepently from the other sub-signals. The modulation applied corresponds to an electrical signal, which the end-user wants to use to encode the optical signal.

The signal obtained at the output 101 is the combination of the four sub-signals phase shifted and modulated.

**Figure 1b** represents the diagram of a mask layout used for the manufacture of a Polarization Division Multiplexed (PDM) QPSK transmitter 10 comprising:
- a laser source 2 configured to generate two similar monochromatic optical signals having only one wavelength λ;
- two QPSK modulators 1, each QPSK modulator 1 being configured to receive, phase-shift and modulate one of the monochromatic optical signal;
- two optical semiconductor amplifiers (SOA) 3, each SOA being configured to receive and amplify one of the signals obtained at the output of the QPSK modulators; and
- a dual-polarization coupler 4 configured to receive and combine the amplified signals obtained so that they have orthogonal polarizations.

Such silicon photonic device are interesting for their compactness, but yet they are still too large to be integrated in a photonic circuit for a multi-wavelength transmitter.

For example, the dimensions of the PDM-QPSK transmitter 10 of figure 1b are 7.6 mm x 5.7 mm = 43.3 mm². Thus for a 10 channel transmitter, the dimension would be 433 mm² which is too large to make the integration economically possible. For example, in a research lab, typical mask reticle size is 21 mm x 21 mm = 441mm², which allows only one such 10 channel chipset per reticle! This low yield leads to very expensive devices.

In order to be competitive in communication market segments such as metro backhauling or inter-datacenter networks, there is a need of smaller, lower-cost, lower power consumption and multi-wavelength transmitter having a higher capacity, either at a few hundreds of gigabits per second (Gbits/s) or at several terabits per second (Tbits/s).

### Summary

To solve the prior art drawbacks, embodiments such as phase shift keying devices and ultra compact optical transmitters have been developed.

In a first embodiment example, a phase shift keying device configured to modulate in phase a non-modulated carrier optical signal at a predetermined wavelength λᵢ, the phase shift keying device comprises:
- a main input configured to receive the non-modulated carrier optical signal;
- an output, a throughput;
- x similar modulated ring resonators, x being an integer greater than or equal to 2, each modulated ring resonator comprising an input port, an output port and a throughput port,
- x static phase shifters; and
- a multiplexer;
wherein
each modulated ring resonator is configured to receive an associated modulated electrical signal carrying information and to transfer the information into an associated modulated signal obtained by filtering at the predetermined wavelength λᵢ the non-modulated carrier optical signal depending on the modulated electrical signal;
the x modulated ring resonators are serially connected so that the input of the first modulated ring resonator is connected to the main input, the throughput of the xth modulated ring resonator is connected to the throughput of the phase shift keying device and, for an integer I comprised between 2 and x, the input of the Ith modulated ring resonator is connected to the throughput of the I-1th modulated ring resonator;
for an integer k comprised between 1 and x, the output of the kth modulated ring resonator is connected to the kth static phase shifter, and the kth static phase shifter is configured to receive and phase shift the kth modulated signal of a phase ϕₖ;
the multiplexer is configured to receive and multiplex all the phase-shifted signals obtained after the phase shift and to send the phase modulated signal obtained into the output of the phase shift keying device.

Specific features or embodiments of the phase shift keying device, usable alone or in combination (provided that there is no conflict between the different elements) are:
the phase shift keying device also comprises a secondary input configured to receive at least another phase modulated signal having a wavelength λⱼ different from the predetermined wavelength λᵢ, wherein the multiplexer is further configured to receive and multiplex the other phase modulated signal with all the phase-shifted signals before sending the multiplexed phase modulated signal obtained into the output of the phase shift keying device;
the throughput is further configured to receive and send out of the phase shift keying device the resulting non-modulated carrier optical signal obtained after the extraction of the predetermined wavelength λᵢ by the modulated ring resonators;
the multiplexer comprises:
   - a coupler configured to receive and couple all the phase-shifted signals obtained after the phase shift; and
   - a ring resonator configured to receive and filter, at the predetermined wavelength λᵢ, the coupled phase-shifted signals and to multiplex the coupled phase-shifted signals with the other phase modulated signal before sending the phase modulated signal obtained into the output of the phase shift keying device.

In a second embodiment example, a multi-wavelength phase shift keying device configured to modulate in phase, at M predetermined wavelengths different from each other, M being an integer greater than or equal to 2, a non-modulated carrier optical signal having N different wavelengths, N being an integer greater than or equal to M the multi-wavelength phase shift keying device comprising:
- M phase shift keying devices as previously described;
wherein,
the first phase shift keying device is configured to modulate in phase the non-modulated carrier optical signal at a predetermined wavelength λ₁; and
wherein, for an integer j comprised between 2 and M
the jth phase shift keying device is configured to receive and modulate in phase, at a predetermined wavelength λⱼ different from λⱼ₋₁, the resulting non-modulated carrier optical signal coming from the throughput of the j-1 th phase shift keying device,
the multiplexer of the j-1th phase shift keying device is configured to receive and multiplex the phase modulated signal coming from the output of the jth phase shift keying device with the phase-shifted signals of the j-1th phase shift keying device before sending the multiplexed phase modulated signal obtained into the output of the j-1th phase shift keying device.

In a third embodiment example, an ultra compact optical transmitter for high speed data telecommunication, the ultra compact optical transmitter being configured to generate an optical signal having M wavelengths different from each other, M being an integer greater than or equal to 1, each wavelength being modulated in phase, the ultra compact optical transmitter comprising:
- a laser source configured to generate a first non-modulated carrier optical signal having N different wavelengths, N being an integer greater than or equal to M; and
- a first multi-wavelength phase shift keying device as previously described, the first multi-wavelength phase shift keying device being configured to modulate in phase the non-modulated carrier optical signal at M predetermined wavelengths different from each other,
wherein the optical signal corresponds to the phase modulated signal at the output of the first phase shift keying device of the first multi-wavelength phase shift keying device.

Advantageously, the laser source may be configured to generate a second non-modulated carrier optical signal similar to the first non-modulated carrier optical signal and the ultra compact optical transmitter may further comprise:
- a second multi-wavelength phase shift keying device similar to the first multi-wavelength phase shift keying device, wherein the first multi-wavelength phase shift keying device is configured to receive and modulate in phase the first non-modulated carrier optical signal at M predetermined wavelengths different from each other, and the second multi-wavelength phase shift keying device is configured to receive and modulate in phase the second non-modulated carrier optical signal at M predetermined wavelengths different from each other; and
- a dual-polarization coupler configured to receive the phase modulated signals obtained at the output of first phase shift keying devices of the multi-wavelength phase shift keying devices and combine the phase modulated signals into a Polarization Division Multiplexing - PDM - signal so that the phase modulated signals have orthogonal polarization at the output of the dual-polarization coupler,
wherein the optical signal corresponds to the PDM signal and each polarization of the optical signal is modulated in phase at M predetermined wavelengths different from each other.

### Brief Description of the Figures

Some embodiments are now described, by way of example only, and with reference to the accompanying drawings, in which :
- Figure 1a schematically illustrates a Quadrature Phase Shift Keying - QPSK - modulator;
- Figure 1b schematically illustrates the diagram of a mask layout used in lithography for the manufacture of a PDM-QPSK device comprising two QPSK modulators as illustrated in figure 1a;
- Figure 2a schematically illustrates an embodiment of a Phase Shift Keying device;
- Figure 2b schematically illustrates a particular embodiment of a Phase Shift Keying device;
- Figure 2c schematically illustrates the diagram of a mask layout which can be used in lithography for the manufacture of a PDM Phase Shift Keying device comprising two Phase Shift Keying devices as illustrated in figure 2a;
- Figure 3 schematically illustrates another embodiment of a phase shift keying device;
- Figure 4 schematically illustrates a modulated ring resonator and its spectral characteristics;
- Figure 5 schematically illustrates a multi-wavelength phase shift keying device; and
- Figure 6 schematically illustrates an ultra compact optical transmitter.

### Definitions

A semiconductor Mach-Zehnder Modulator is a Mach-Zehnder interferometer integrated on a semiconductor wafer, where lightwaves propagate in integrated waveguides. It comprises a waveguide split up into two interferometer waveguides or arms.

These two arms can be independently modulated, thus introducing a modulation of the optical path difference, which is translated into the modulation of the phase difference between the two arms. Both arms are recombined via a 3dB coupler and the recombined lightwave has a controlled amplitude and phase modulation.

Generally, if a voltage is applied across one of the arms, a phase shift is induced for the wave passing through that arm, via electro optic effects (fast effects, such as Pockels effect, carrier depletion effect or carrier accumulation effect) or via thermo-optical effects (slow effects via a Joule effect heater for instance). When the two arms are recombined, the phase difference modulation between the two waves is converted to an amplitude modulation.

### Description of Embodiments

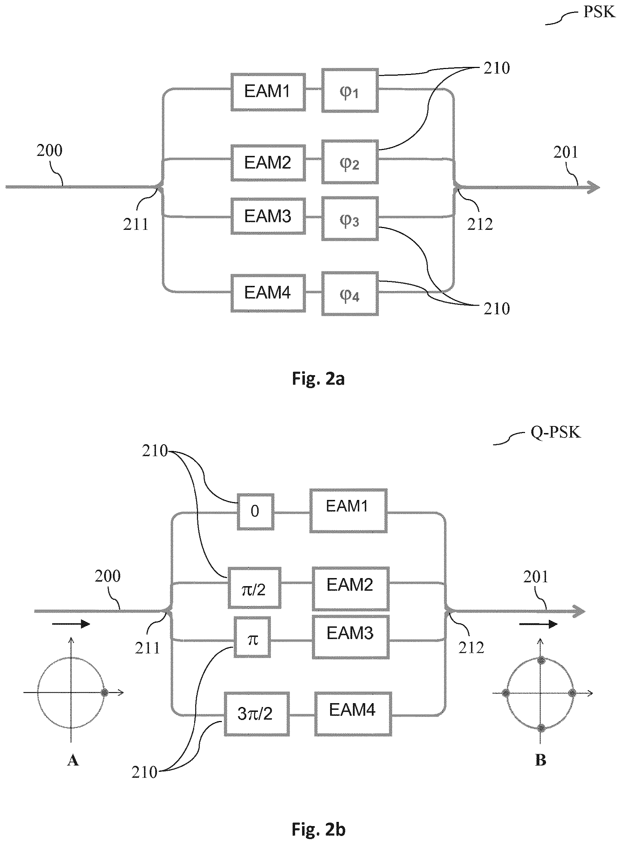

In a first embodiment example illustrated in **figure 2a****,** a Phase Shift Keying device PSK using phase switching based on electro-absorption modulators, or EAMs, comprising:
- an input 200 configured to receive an optical signal having at least one wavelength λ;
- an optical splitter 211 configured to split the received optical signal into four similar signals that define four paths or arms;
- at least three phase shifters 210;
- four electro-absorption modulators EAM1, EAM2, EAM3 and EAM4;
- an optical coupler 212; and
- an output 201.

On each of the four arms generated by the optical splitter 220 is located one of the electro-absorption modulators EAM1, EAM2, EAM3 and EAM4 configured to receive one of the sub-signal and perform high speed switching by letting the sub-signal pass or absorbing it depending on an encoding electrical signal. The electro-absorption modulators EAM1, EAM2, EAM3 and EAM4, thus, behave like optical switches.

On at least three of the four arms generated by the optical splitter 211 is also located one of the phase shifters 210 configured to receive and to phase shift by a customized static phase value the sub-signal so that each of the sub-signals has a phase different from each other's phase.

The optical coupler 212 is configured to recombine together the sub-signals after their modulation by the electro-absorption modulator and their phase-shift. Thus, the signal obtained at the output 201 is the recombination of the four sub-signals phase shifted and modulated.

Advantageously, the electro-absorption modulators EAM1, EAM2, EAM3 and EAM4 may be based on III-V materials.

The fact that each phase shifter 210 is independent from each other enables a fine tuning of each customized static phase value.

**Figure 2b** illustrates a particular embodiment of the previous phase shift keying device PSK wherein the customized static phase values of the at least three phase shifters 210 are respectively equal to π/2, π and 3π/2. Such phase shift keying device PSK corresponds to a Quadrature Phase Shift Keying device Q-PSK.

In the case illustrated in **figure 2b****,** a continuous wave (CW, i.e. non modulated carrier, with a constant amplitude, here normalized to the radius of a circle, and a constant phase, here normalized to zero) optical signal, represented by the signal constellation A, is phase-shifted and has the signal constellation B at the output 201 of the Q-PSK device when the CW optical signal is switched by all four electro-absorption modulators EAM1, EAM2, EAM3 and EAM4 and when the phase shifters are tuned to give the given static phase difference values as sketched on **figure 2b****:** 0 (the reference one), π/2, π and 3 π/2.

Phase shift keying devices PSK based on electro-absorption modulators are smaller than QPSK modulators 1.

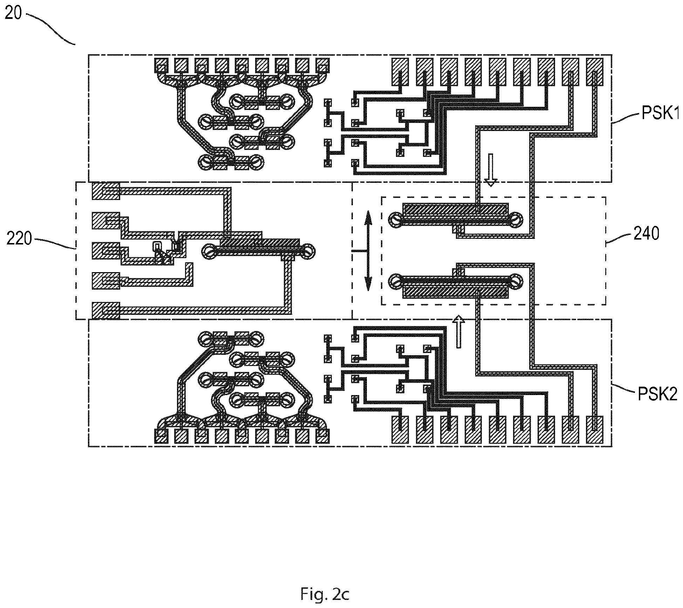

For example, as illustrated in **figure 2c****,** a Polarization Division Multiplexing - PDM - phase shift keying transmitter 20 comprising:
- a laser source 220 configured to generate two similar optical signals having at least one wavelength λ;
- two phase shift keying devices PSK1 and PSK2 as previously described, each being configured to receive, phase-shift and modulate one of the optical signal;
- a dual-polarization coupler 240 configured to receive and amplify each of the signals obtained at the output of the phase shift keying devices PSK1 and PSK2, and combine them together so that they have orthogonal polarizations;
said PDM phase shift keying transmitter 20 has a typical dimensions of 3.8 mm x 2.8 mm, which makes an area of 10.64 mm², which is a 4-fold room saving as compared to the bipolar QPSK device 10 of **figure 1b****.**

However, such electro-absorption modulators are wavelength sensitive, so the optical bandwidth is limited and they can introduce excessive chirp effect during switching.

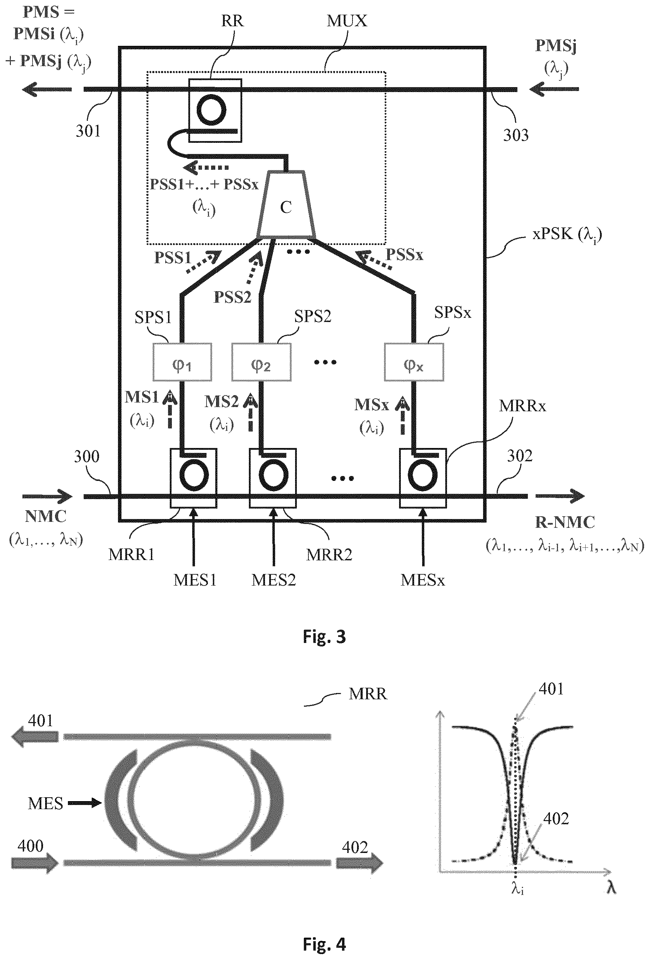

To solve these drawbacks and further improve the compactness, a second embodiment example, as illustrated in **figure 3****,** represents a phase shift keying device xPSK.

The phase shift keying device xPSK is configured to modulate in phase a non-modulated carrier optical signal NMC at a predetermined wavelength λᵢ, and comprises:
- a main input 300 configured to receive the non-modulated carrier optical signal NMC;
- an output 301, a throughput 302;
- x similar modulated ring resonators MRR, x being an integer greater than or equal to 2, each modulated ring resonator MRRx comprising an input port (400), an output port (401) and a throughput port (402), as illustrated in **figure 4****,**
- x static phase shifters SPS; and
- a multiplexer MUX.

Each modulated ring resonator MRR is configured to receive an associated modulated electrical signal MES carrying information and to transfer the information into an associated modulated signal MS obtained by filtering at the predetermined wavelength λᵢ the non-modulated carrier optical signal NMC depending on the modulated electrical signal MES. By the term "similar" we mean that the modulated ring resonators MRR have the same function and thus the same filtering wavelength λᵢ, however each associated modulated electrical signal MES is independent of the others.

The x modulated ring resonators MRR are serially connected so that the input 400_1 of the first modulated ring resonator MRR1 is connected to the main input 300, the throughput 402_x of the xth modulated ring resonator MRRx is connected to the throughput 302 of the phase shift keying device xPSK and, for an integer I comprised between 2 and x, the input 400_I of the Ith modulated ring resonator MRRI is connected to the throughput 402_I-1 of the I-1th modulated ring resonator MRRI-1.

For an integer k comprised between 1 and x, the output 401_k of the kth modulated ring resonator MRRk is connected to the kth static phase shifter SPSk, and the kth static phase shifter SPSk is configured to receive and phase shift the kth modulated signal MS of a phase ϕₖ.

The multiplexer MUX is configured to receive and multiplex all the phase-shifted signals PSS1 to PSSx obtained after the phase shift and to send the phase modulated signal PMS = PSS1+...+PSSx obtained into the output 301 of the phase shift keying device xPSK.

**Figure 4** also illustrates the spectral characteristics of a modulated ring resonator MRR. The graph on the right shows that the part of the signal containing the predetermined wavelength λᵢ is sent to the output 401 of the modulated ring resonator MRR while the rest of the signal is sent to the throughput 402 of the modulated ring resonator MRR, when the modulated ring resonator MRR is active, that means in an "On" or "passing" position.

The associated modulated electrical signal MES may, for example, command the MRR through a fast electro-optical effect (such as the Pockels effect, the carrier depletion or accumulation effets) by driving the high speed MES into the MRR active structure via a system of suited radio-frequency (RF) electrodes. This fast effet will shift the resonance wavelength in optical transmission spectrum of the modulated ring resonator MRR so that the modulated ring resonator MRR behaves like an optical switch: the custom wavelength, said the predetermined wavelength λᵢ, will get through the resonance window of the MRR or blocked, according to the MES value.

Thus, in the "On" or "passing" position, the modulated ring resonator MRR lets the signal pass at the predetermined wavelength λᵢ and then sends it to the output 402, while the rest of the signal is sent to the throughput 402. In the "Off" all the signal is directly send to the throughput 402.

Advantageously, the phase shift keying device xPSK also comprises a secondary input 303 configured to receive at least another phase modulated signal PMSj having a wavelength λⱼ different from the predetermined wavelength λᵢ.

In this case, the multiplexer MUX is further configured to receive and multiplex the other phase modulated signal PMSj with all the phase-shifted signals PSS1 to PSSx (PMSi = PSS1 + ...+PSSx) before sending the multiplexed phase modulated signal PMS = PMSi (λᵢ) + PMSj (λⱼ) obtained into the output 301 of the phase shift keying device xPSK.

Advantageously, the throughput 302 can further be configured to receive and send out of the phase shift keying device xPSK the resulting non-modulated carrier optical signal R-NMC obtained after the extraction of the predetermined wavelength λᵢ by the modulated ring resonators MRR.

These two options enable to connect several phase shift keying devices in series and thus be able to modulate in phase a multi-wavelength signal.

In order to inject the coupled phase-shifted signals PSS1 to PSSx multiplexed with the other phase modulated signal PMSj into the output 301 of the phase shift keying device xPSK, the multiplexer MUX may comprise:
a coupler configured to receive and couple the phase-shifted signals PSS1 to PSSx obtained after the phase shift; and
a ring resonator RR configured to receive and filter, at the predetermined wavelength λᵢ, the coupled phase-shifted signals PSS1 to PSSx and to multiplex the coupled phase-shifted signals PSS1 to PSSx (PMSi = PSS1 + ...+PSSx) with the other phase modulated signal PMSj before sending the phase modulated signal PMS = PMSi (λᵢ) + PMSj (λⱼ) obtained into the output 301 of the phase shift keying device xPSK.

This particular configuration of the multiplexer also prevents the injection of the other phase modulated signal PMSj into the static phase shifters SPS1 to SPSx and into the modulated ring resonators MRR1 to MRRx.

Such phase shift keying devices xPSK as previously described are much more compact, thus cheaper to fabricate (higher yield = more chips from a single fabrication run), less power consuming, and have larger capacities and capability to adapt their functionality to the network segments, for example they can be configured to support and function with multiple wavelengths.

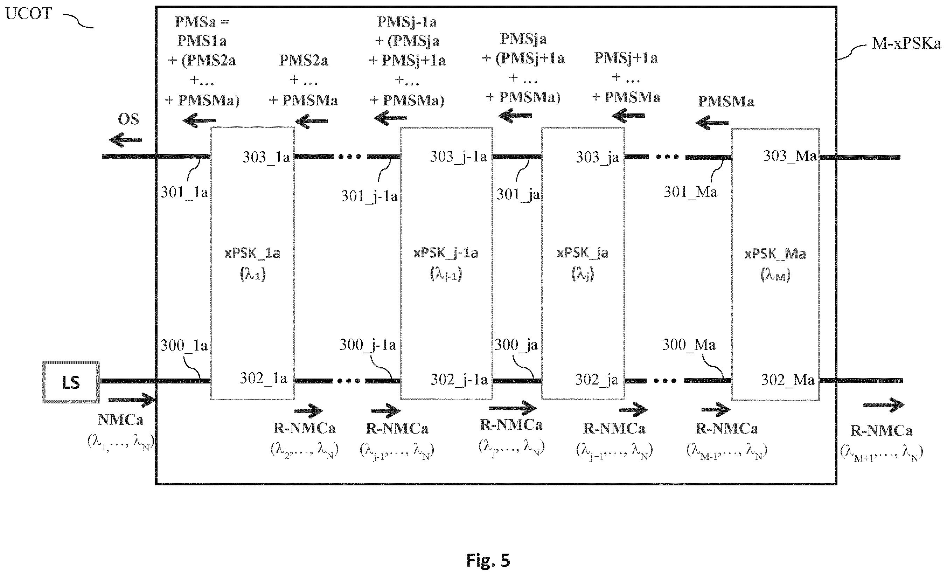

In a third embodiment example as illustrated in **figure 5****,** a multi-wavelength phase shift keying device M-xPSK is configured to modulate in phase, at M predetermined wavelengths different from each other, M being an integer greater than or equal to 2, a non-modulated carrier optical signal NMC having N different wavelengths, N being an integer greater than or equal to M.

The multi-wavelength phase shift keying device M-xPSK comprises M phase shift keying devices xPSK as previously described.

The first phase shift keying device xPSK_1 device is configured to modulate in phase the non-modulated carrier optical signal NMC at a predetermined wavelength λ₁; and
For an integer j comprised between 2 and M:
the jth phase shift keying device xPSK_j is configured to receive and modulate in phase, at a predetermined wavelength λⱼ different from λⱼ₋₁, and also different from any other wavelength, the resulting non-modulated carrier optical signal R-NMC coming from the throughput 302_j-1 of the j-1 th phase shift keying device xPSK_j-1; and
the multiplexer of the j-1th phase shift keying device xPSK_j-1 is configured to receive and multiplex the phase modulated signal coming from the output 301_j of the jth phase shift keying device xPSK_j with the phase-shifted signals PSS1_j-1 to PSSx_j-1 of the j-1th phase shift keying device xPSK_j-1 before sending the multiplexed phase modulated signal obtained into the output 301_j-1 of the j-1th phase shift keying device xPSK_j-1.

In a fourth embodiment example as illustrated in **figure 5****,** an ultra compact optical transmitter UCOT for high speed data telecommunication, is configured to generate an optical signal OS having M wavelengths different from each other, M being an integer greater than or equal to 1, each wavelength being modulated in phase.

The ultra compact optical transmitter UCOT comprises:
- a laser source LS configured to generate a first non-modulated carrier optical signals NMCa having N different wavelengths, N being an integer greater than or equal to M; and
- a first multi-wavelength phase shift keying device M-xPSKa as previously described, the first multi-wavelength phase shift keying device M-xPSKa being configured to modulate in phase the non-modulated carrier optical signal NMCa at M predetermined wavelengths different from each other.

The optical signal OS corresponds to the phase modulated signal PMSa at the output 301_1a of the first phase shift keying device xPSK_1a of the first multi-wavelength phase shift keying device M-xPSKa.

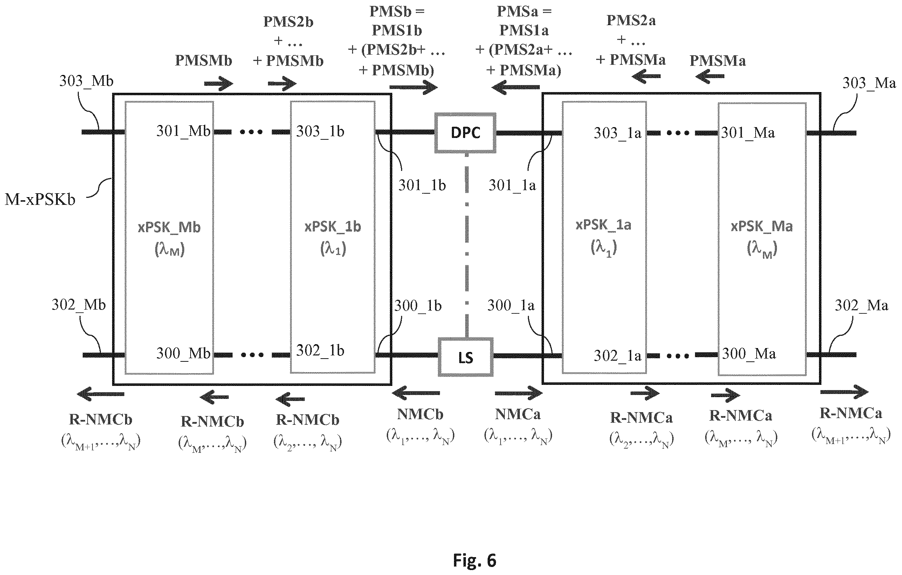

So as to improve the outflow capacity of the ultra compact optical transmitter UCOT and as illustrated in **figure 6****,** the laser source LS can advantageously be configured to generate a second non-modulated carrier optical signal NMCb similar to the first non-modulated carrier optical signal NMCa (i.e. having the same characteristics in terms of number of wavelengths, same wavelengths, etc.) and the ultra compact optical transmitter UCOT may further comprise:
- a second multi-wavelength phase shift keying device M-xPSKb similar to the first multi-wavelength phase shift keying device M-xPSKa (i.e. having the same number of phase shift keying devices x PSK, with the same configuration), wherein the first multi-wavelength phase shift keying device M-xPSKa is configured to receive and modulate in phase the first non-modulated carrier optical signal NMCa at M predetermined wavelengths different from each other, and the second multi-wavelength phase shift keying device M-xPSKb is configured to receive and modulate in phase the second non-modulated carrier optical signal NMCb at M predetermined wavelengths different from each other; and
- a dual-polarization coupler DPC configured to receive the phase modulated signals PMSa and PMSb obtained at the output 301_1a and 301_1b of first phase shift keying devices xPSK_1 a and xPSK_1 b of the multi-wavelength phase shift keying devices M-xPSKa and M-xPSKb and combine the phase modulated signals PMSa and PMSb into a Polarization Division Multiplexing - PDM - signal so that the phase modulated signals PMSa and PMSb have orthogonal polarization at the output of the dual-polarization coupler DPC.

In this case, the optical signal OS corresponds to the PDM signal and each polarization of the optical signal OS is modulated in phase at M predetermined wavelengths different from each other.

So as to double the bit-rate of encoded optical signals, thus achieving the so-called PDM-QPSK format, the associated modulated electrical signals MES of each modulated ring resonator MRR of each multi-wavelength phase shift keying devices M-xPSKa and M-xPSKb may be all independent with one another.

Typically, the dimension of such an ultra compact optical transmitter UCOT having 10 wavelengths (or channels) and functioning at 1 Terabits per second is around 2 mm x 11 mm = 22 mm², which is almost 20 times smaller than a PDM-QPSK device 10 (see **figure 1b**) having 10 channels and 4 times smaller than an EAM-switched PDM phase shift keying transmitter 20 (see **figure 2c**) having 10 channels.

Thus, the gain in compactness and the increase in bit-rate capacities are huge. And with a lower power consumption, the new PDM-QPSK transmitters 20 and the new ultra compact optical transmitters UCOT are far better than the previous art ones.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

### REFERENCES NUMERALS

**Figures 1a and 1b**
   1 Quadrature Phase Shift Keying - QPSK - Modulator
   2 Laser Source
   3 Gain Section
   4 Dual-polarization Coupler
   10 Polarization Division Multiplexing - PDM - Quadrature Phase Shift Keying - QPSK - Transmitter
   100 Input
   101 Output
   110 Prefixed Optical Phase Shifter
   120 p-i-n Carrier Depletion Zone
   MZM Mach-Zehnder Modulator
**Figures 2a to 2c**
   20 Polarization Division Multiplexing - PDM - Phase Shift Keying Transmitter
   200 Input
   201 Output
   210 Phase Shifter
   211 Optical Splitter
   212 Optical Coupler
   220 Laser source
   240 Dual-polarization Coupler
   EAM Electro-Absorption Modulator
**Figures 3 to 5****:**
   300 Main Input
   301 Output
   302 Throughput
   303 Secondary Input
   400 Input port of a Modulated Ring Resonator
   401 Output port of a Modulated Ring Resonator
   402 Throughput port of a Modulated Ring Resonator
   C Coupler
   DPC Dual-Polarization Coupler
   LS Laser Source
   MS Modulated Signal, corresponds to the signal at the output of a modulated ring resonator
   MES Modulated Electrical Signal
   MRR Modulated Ring Resonator
   MUX MUtipleXer
   M-xPSK Multi-wavelength Phase Shift Keying device
   NMC Non-Modulated Carrier optical signal
   OS Optical Signal
   PDM Polarization Division Multiplexing
   PMS Phase Modulated Signal, corresponds to the signal at the output of a phase shift keying device
   PSS Phase Shifted Signal, corresponds to the signal at the output of a static phase shifter
   R-NMC Resulting- Non-Modulated Carrier optical signal RR Ring Resonator
   SPS Static Phase Shifter
   UCOT Ultra Compact Optical Transmitter
   xPSK Phase Shift Keying device

## Claims

1. A phase shift keying device (xPSK) configured to modulate in phase a non-modulated carrier optical signal (NMC) at a predetermined wavelength λᵢ, the phase shift keying device (xPSK) comprising:
• a main input (300) configured to receive the non-modulated carrier optical signal (NMC);
• an output (301), a throughput (302);
• x similar modulated ring resonators (MRR), x being an integer greater than or equal to 2, each modulated ring resonator (MRRx) comprising an input port (400), an output port (401) and a throughput port (402),
• x static phase shifters (SPS); and
• a multiplexer (MUX);
wherein
each modulated ring resonator (MRR) is configured to receive an associated modulated electrical signal (MES) carrying information and to transfer the information into an associated modulated signal (MS) obtained by filtering at the predetermined wavelength λᵢ the non-modulated carrier optical signal (NMC) depending on the modulated electrical signal (MES);
the x modulated ring resonators (MRR) are serially connected so that the input (400_1) of the first modulated ring resonator (MRR1) is connected to the main input (300), the throughput (402_x) of the xth modulated ring resonator (MRRx) is connected to the throughput (302) of the phase shift keying device (xPSK) and, for an integer I comprised between 2 and x, the input (400_I) of the Ith modulated ring resonator (MRRI) is connected to the throughput (402_I-1) of the I-1th modulated ring resonator (MRRI-1):
for an integer k comprised between 1 and x, the output (401_k) of the kth modulated ring resonator (MRRk) is connected to the kth static phase shifter (SPSk), and the kth static phase shifter (SPSk) is configured to receive and phase shift the kth modulated signal (MS) of a phase ϕₖ;
the multiplexer (MUX) is configured to receive and multiplex all the phase-shifted signals (PSS1 to PSSx) obtained after the phase shift and to send the phase modulated signal (PMS) obtained into the output (301) of the phase shift keying device (xPSK).

2. The phase shift keying device (xPSK) according to claim 1, wherein the phase shift keying device (xPSK) also comprises:
• a secondary input (303) configured to receive at least another phase modulated signal (PMSj) having a wavelength λⱼ different from the predetermined wavelength λᵢ;
wherein
the multiplexer (MUX) is further configured to receive and multiplex the other phase modulated signal (PMSj) with all the phase-shifted signals (PSS1 to PSSx) before sending the multiplexed phase modulated signal (PMS) obtained into the output (301) of the phase shift keying device (xPSK).

3. The phase shift keying device (xPSK) according to claim 2 wherein the throughput (302) is further configured to receive and send out of the phase shift keying device (xPSK) the resulting non-modulated carrier optical signal (R-NMC) obtained after the extraction of the predetermined wavelength λᵢ by the modulated ring resonators (MRR).

4. The phase shift keying device (xPSK) according to claim 3 wherein the multiplexer (MUX) comprises:
• a coupler (C) configured to receive and couple all the phase-shifted signals (PSS1 to PSSx) obtained after the phase shift; and
• a ring resonator (RR) configured to receive and filter, at the predetermined wavelength λᵢ, the coupled phase-shifted signals (PSS1 to PSSx) and to multiplex the coupled phase-shifted signals (PSS1 to PSSx) with the other phase modulated signal (PMSj) before sending the phase modulated signal (PMS) obtained into the output (301) of the phase shift keying device (xPSK).

5. A multi-wavelength phase shift keying device (M-xPSK) configured to modulate in phase, at M predetermined wavelengths different from each other, M being an integer greater than or equal to 2, a non-modulated carrier optical signal (NMC) having N different wavelengths, N being an integer greater than or equal to M, the multi-wavelength phase shift keying device (M-xPSK) comprising:
• M phase shift keying devices (xPSK) as claimed in claim 4;
wherein,
the first phase shift keying device (xPSK_1) is configured to modulate in phase the non-modulated carrier optical signal (NMC) at a predetermined wavelength λ₁; and
wherein, for an integer j comprised between 2 and M the jth phase shift keying device (xPSK_j) is configured to receive and modulate in phase, at a predetermined wavelength λⱼ different from λⱼ₋₁, the resulting non-modulated carrier optical signal (R-NMC) coming from the throughput (302_j-1) of the j-1 th phase shift keying device (xPSK_j-1),
the multiplexer of the j-1th phase shift keying device (xPSK_j-1) is configured to receive and multiplex the phase modulated signal coming from the output (301_j) of the jth phase shift keying device (xPSK_j) with the phase-shifted signals (PSS1_j-1 to PSSx_j-1) of the j-1th phase shift keying device (xPSK_j-1) before sending the multiplexed phase modulated signal obtained into the output (301_j-1) of the j-1th phase shift keying device (xPSK_j-1).

6. An ultra compact optical transmitter (UCOT) for high speed data telecommunication, the ultra compact optical transmitter (UCOT) being configured to generate an optical signal (OS) having M wavelengths different from each other, M being an integer greater than or equal to 1, each wavelength being modulated in phase, the ultra compact optical transmitter (UCOT) comprising:
• a laser source (LS) configured to generate a first non-modulated carrier optical signal (NMCa) having N different wavelengths, N being an integer greater than or equal to M; and
• a first multi-wavelength phase shift keying device (M-xPSKa) as claimed in claim 5, the first multi-wavelength phase shift keying device (M-xPSKa) being configured to modulate in phase the non-modulated carrier optical signal (NMCa) at M predetermined wavelengths different from each other,
wherein the optical signal (OS) corresponds to the phase modulated signal (PMSa) at the output (301_1a) of the first phase shift keying device (xPSK_1a) of the first multi-wavelength phase shift keying device (M-xPSKa).

7. The ultra compact optical transmitter (UCOT) as claimed in claim 6, wherein the laser source (LS) is configured to generate a second non-modulated carrier optical signal (NMCb) similar to the first non-modulated carrier optical signal (NMCa) and wherein the ultra compact optical transmitter (UCOT) further comprises:
• a second multi-wavelength phase shift keying device (M-xPSKb) similar to the first multi-wavelength phase shift keying device (M-xPSKa), wherein the first multi-wavelength phase shift keying device (M-xPSKa) is configured to receive and modulate in phase the first non-modulated carrier optical signal (NMCa) at M predetermined wavelengths different from each other, and the second multi-wavelength phase shift keying device (M-xPSKb) is configured to receive and modulate in phase the second non-modulated carrier optical signal (NMCb) at M predetermined wavelengths different from each other; and
• a dual-polarization coupler (DPC) configured to receive the phase modulated signals (PMSa, PMSb) obtained at the output (301_1a and 301_&b) of first phase shift keying devices (xPSK_1a, xPSK_1 b) of the multi-wavelength phase shift keying devices (M-xPSKa, M-xPSKb) and combine the phase modulated signals (PMSa, PMSb) into a Polarization Division Multiplexing - PDM - signal so that the phase modulated signals (PMSa, PMSb) have orthogonal polarization at the output of the dual-polarization coupler (DPC),
wherein the optical signal (OS) corresponds to the PDM signal and each polarization of the optical signal (OS) is modulated in phase at M predetermined wavelengths different from each other.

## Patentansprüche

1. Phasenumtastungsvorrichtung (xPSK), die dazu ausgelegt ist, ein nicht moduliertes optisches Trägersignal (NMC) mit einer vorbestimmten Wellenlänge λᵢ in Phase zu modulieren, wobei die Phasenumtastungsvorrichtung (xPSK) Folgendes umfasst:
• einen Haupteingang (300), der dazu ausgelegt ist, das nicht modulierte optische Trägersignal (NMC) zu empfangen;
• einen Ausgang (301), einen Durchgang (302);
• x ähnliche modulierte Ringresonatoren (MRR), wobei x eine Ganzzahl größer als oder gleich 2 ist, wobei jeder modulierte Ringresonator (MRRx) einen Eingangsanschluss (400), einen Ausgangsanschluss (401) und einen Durchgangsanschluss (402) umfasst,
• x statische Phasenverschieber (SPS); und
• einen Multiplexer (MUX);
wobei
jeder modulierte Ringresonator (MRR) dazu ausgelegt ist, ein verknüpftes moduliertes elektrisches Signal (MES), das Informationen enthält, zu empfangen und die Informationen in ein verknüpftes moduliertes Signal (MS) zu übertragen, das durch Filtern des nicht modulierten optischen Trägersignals (NMC) bei der vorbestimmten Wellenlänge λᵢ in Abhängigkeit vom modulierten elektrischen Signal (MES) erhalten wird;
die x modulierten Ringresonatoren (MRR) in Reihe verbunden sind, derart, dass der Eingang (400_1) des ersten modulierten Ringresonators (MRR1) mit dem Haupteingang (300) verbunden ist, der Durchgang (402_x) des x-ten modulierten Ringresonators (MRRx) mit dem Durchgang (302) der Phasenumtastungsvorrichtung (xPSK) verbunden ist und für eine Ganzzahl I, die zwischen 2 und x umfasst ist, der Eingang (400_I) des I-ten modulierten Ringresonators (MRRI) mit dem Durchgang (402_I-1) des I-1-ten modulierten Ringresonators (MRR-1) verbunden ist;
für eine Ganzzahl k, die zwischen 1 und x umfasst ist, der Ausgang (401_k) des k-ten modulierten Ringresonators (MRRk) mit dem k-ten statischen Phasenverschieber (SPSk) verbunden ist, und der k-ten statische Phasenverschieber (SPSk) dazu ausgelegt ist, das k-ten modulierte Signal (MS) einer Phase ϕₖ zu empfangen und phasenzuverschieben;
der Multiplexer (MUX) dazu ausgelegt ist, alle phasenverschobenen Signale (PSS1 bis PSSx), die nach der Phasenverschiebung erhalten werden, zu empfangen und zu multiplexen und das erhaltene phasenmodulierte Signal (PMS) an den Ausgang (301) der Phasenumtastungsvorrichtung (xPSK) zu senden.

2. Phasenumtastungsvorrichtung (xPSK) nach Anspruch 1, wobei die Phasenumtastungsvorrichtung (xPSK) außerdem Folgendes umfasst:
• einen sekundären Eingang (303), der dazu ausgelegt ist, mindestens ein weiteres phasenmoduliertes Signal (PMSj) mit einer Wellenlänge λⱼ, die sich von der vorbestimmten Wellenlänge λᵢ unterscheidet, zu empfangen;
wobei
der Multiplexer (MUX) ferner dazu ausgelegt ist, das weitere phasenmodulierte Signal (PMSj) mit allen phasenverschobenen Signalen (PSS1 bis PSSx) zu empfangen und zu multiplexen, bevor das erhaltene gemultiplexte phasenmodulierte Signal (PMS) an den Ausgang (301) der Phasenumtastungsvorrichtung (xPSK) gesendet wird.

3. Phasenumtastungsvorrichtung (xPSK) nach Anspruch 2, wobei der Durchgang (302) ferner dazu ausgelegt ist, das resultierende nicht modulierte optische Trägersignal (R-NMC), das nach der Extraktion der vorbestimmten Wellenlänge λᵢ durch die modulierten Ringresonatoren (MRR) erhalten wird, zu empfangen und aus der Phasenumtastungsvorrichtung (xPSK) zu senden.

4. Phasenumtastungsvorrichtung (xPSK) nach Anspruch 3, wobei der Multiplexer (MUX) Folgendes umfasst:
• einen Koppler (C), der dazu ausgelegt ist, alle phasenverschobenen Signalen (PSS1 bis PSSx), die nach der Phasenverschiebung erhalten wurden, zu empfangen; und
• einen Ringresonator (RR), der dazu ausgelegt ist, die gekoppelten phasenverschobenen Signale (PSS1 bis PSSx) bei der vorbestimmten Wellenlänge λᵢ zu empfangen und zu filtern und die gekoppelten phasenverschobenen Signale (PSS1 bis PSSx) mit dem anderen phasenmodulierten Signal (PMSj) zu multiplexen, bevor das erhaltene phasenmodulierte Signal (PMS) an den Ausgang (301) der Phasenumtastungsvorrichtung (xPSK) gesendet wird.

5. Phasenumtastungsvorrichtung (M-xPSK) für mehrere Wellenlängen, der dazu ausgelegt ist, ein nicht moduliertes optisches Trägersignal (NMC) mit N verschiedenen Wellenlängen, wobei N eine Ganzzahl größer als oder gleich M ist, bei M vorbestimmten Wellenlängen, die sich voneinander unterscheiden, wobei M eine Ganzzahl größer als oder gleich 2 ist, in Phase zu modulieren, wobei die Phasenumtastungsvorrichtung (M-xPSK) für mehrere Wellenlängen Folgendes umfasst:
• M Phasenumtastungsvorrichtungen (xPSK) wie in Anspruch 4 beansprucht;
wobei
die erste Phasenumtastungsvorrichtung (xPSK_1) dazu ausgelegt ist, das nicht modulierte optische Trägersignal (NMC) mit einer vorbestimmten Wellenlänge λ₁ in Phase zu modulieren; und
wobei für eine Ganzzahl j, die zwischen 2 und M umfasst ist,
die j-ten Phasenumtastungsvorrichtung (xPSK_j) dazu ausgelegt ist, das resultierende nicht modulierte optische Trägersignal (R-NMC), das vom Durchgang (302_j-1) der j-1-ten Phasenumtastungsvorrichtung (xPSK_j-1) kommt, bei einer vorbestimmten Wellenlänge λⱼ, die sich von λⱼ₋₁ unterscheidet, zu empfangen und in Phase zu modulieren,
der Multiplexer der j-1-ten Phasenumtastungsvorrichtung (xPSK_j-1) dazu ausgelegt ist, das phasenmodulierte Signal, das vom Ausgang (301_j) der j-ten Phasenumtastungsvorrichtung (xPSK_j) kommt, mit den phasenverschobenen Signalen (PSS1_j-1 bis PSSx_j-1) der j-1-ten Phasenumtastungsvorrichtung (xPSK_j-1) zu empfangen und in Phase zu multiplexen, bevor das empfangene gemultiplexte phasenmodulierte Signal an den Ausgang (301_j-1) der j-1-ten Phasenumtastungsvorrichtung (xPSK_j-1) gesendet wird.

6. Ultrakompakter optischer Sender (UCOT) für eine Hochgeschwindigkeitsdatentelekommunikation, wobei der ultrakompakte optische Sender (UCOT) dazu ausgelegt ist, ein optisches Signal (OS) mit M Wellenlängen, die sich voneinander unterscheiden, zu erzeugen, wobei M eine Ganzzahl größer als oder gleich 1 ist, wobei jede Wellenlänge in Phase moduliert wird, wobei der ultrakompakte optische Sender (UCOT) Folgendes umfasst:
• eine Laserquelle (LS), die dazu ausgelegt ist, ein erstes nicht moduliertes optisches Trägersignal (NMCa) mit N verschiedenen Wellenlängen zu erzeugen, wobei N eine Ganzzahl größer als oder gleich M ist; und
• eine erste Phasenumtastungsvorrichtung (M-xPSKa) für mehrere Wellenlängen wie in Anspruch 5 beansprucht, wobei die erste Phasenumtastungsvorrichtung (M-xPSKa) für mehrere Wellenlängen dazu ausgelegt ist, das nicht modulierte optische Trägersignal (NMCa) bei M vorbestimmten Wellenlängen, die sich voneinander unterscheiden, in Phase zu modulieren,
wobei das optische Signal (OS) dem phasenmodulierten Signal (PMSa) am Ausgang (301_1a) der ersten Phasenumtastungsvorrichtung (xPSK_1a) der ersten Phasenumtastungsvorrichtung (M-xPSKa) für mehrere Wellenlängen entspricht.

7. Ultrakompakter optischer Sender (UCOT) wie in Anspruch 6 beansprucht, wobei die Laserquelle (LS) dazu ausgelegt ist, ein zweites nicht moduliertes optisches Trägersignal (NMCb), das dem ersten nicht modulierten optischen Trägersignal (NMCa) ähnlich ist, zu erzeugen, und wobei der ultrakompakte optische Sender (UCOT) ferner Folgendes umfasst:
• eine zweite Phasenumtastungsvorrichtung (M-xPSKb) für mehrere Wellenlängen, die der ersten Phasenumtastungsvorrichtung (M-xPSKa) für mehrere Wellenlängen ähnlich ist, wobei die erste Phasenumtastungsvorrichtung (M-xPSKa) für mehrere Wellenlängen dazu ausgelegt ist, das erste nicht modulierte optische Trägersignal (NMCa) bei M vorbestimmten Wellenlängen, die sich voneinander unterscheiden, zu empfangen und in Phase zu modulieren, und die zweite Phasenumtastungsvorrichtung (M-xPSKb) für mehrere Wellenlängen dazu ausgelegt ist, das zweite nicht modulierte optische Trägersignal (NMCb) bei M vorbestimmten Wellenlängen, die sich voneinander unterscheiden, zu empfangen und in Phase zu modulieren; und
• einen Koppler (DPC) mit zwei Polarisationen, der dazu ausgelegt ist, die phasenmodulierten Signale (PMSa, PMSb), die am Ausgang (301_1a und 301_&b) von ersten Phasenumtastungsvorrichtungen (xPSK_1a, xPSK_1b) der Phasenumtastungsvorrichtungen (M-xPSKa, M-xPSKb) für mehrere Wellenlängen erhalten werden, zu empfangen und die phasenmodulierten Signale (PMSa, PMSb) zu einem Polarisationsteilungsmultiplexing(PDM)-Signal zu kombinieren, derart, dass die phasenmodulierten Signale (PMSa, PMSb) am Ausgang des Kopplers (DPC) mit zwei Polarisationen eine orthogonale Polarisation aufweisen,
wobei das optische Signal (OS) dem PDM-Signal entspricht und jede Polarisation des optischen Signals (OS) bei M vorbestimmten Wellenlängen, die sich voneinander unterscheiden, in Phase moduliert wird.

## Revendications

1. Dispositif de modulation par déplacement de phase (xPSK) configuré pour moduler en phase un signal optique porteur non modulé (NMC) à une longueur d'onde prédéterminée λᵢ, le dispositif de modulation par déplacement de phase (xPSK) comprenant :
• une entrée principale (300) configurée pour recevoir le signal optique porteur non modulé (NMC) ;
• un sortie (301), un débit (302) ;
• x résonateurs en anneau modulés (MRR) similaires, x étant un nombre entier supérieur ou égal à 2, chaque résonateur en anneau modulé (MRRx) comprenant un port d'entrée (400), un port de sortie (401) et un port de débit (402),
• x déphaseurs statiques (SPS) ; et
• un multiplexeur (MUX) ;
dans lequel
chaque résonateur en anneau modulé (MRR) est configuré pour recevoir un signal électrique modulé (MES) associé portant des informations et pour transférer les informations dans un signal modulé (MS) associé obtenu en filtrant, à la longueur d'onde prédéterminée λᵢ, le signal optique porteur non modulé (NMC) en fonction du signal électrique modulé (MES) ;
les x résonateurs en anneau modulés (MRR) sont connectés en série, de sorte que l'entrée (400_1) du premier résonateur en anneau modulé (MRR1) soit connectée à l'entrée principale (300), que le débit (402_x) du x^{ème} résonateur en anneau modulé (MRRx) soit connecté au débit (302) du dispositif de modulation par déplacement de phase (xPSK) et, pour un entier I compris entre 2 et x, l'entrée (400_I) du I^{ème} résonateur en anneau modulé (MRRI) est connectée au débit (402_I-1) du I-1^{ème} résonateur en anneau modulé (MRRI-1) ;
pour un entier k compris entre 1 et x, la sortie (401_k) du k^{ème} résonateur en anneau modulé (MRRk) est connectée au k^{ème} déphaseur statique (SPSk), et le k^{ème} déphaseur statique (SPSk) est configuré pour recevoir et déphaser le k^{ème} signal modulé (MS) d'une phase ϕₖ ;
le multiplexeur (MUX) est configuré pour recevoir et multiplexer tous les signaux déphasés (PSS1 à PSSx) obtenus après le déplacement de phase et pour envoyer le signal modulé en phase (PMS) obtenu dans la sortie (301) du dispositif de modulation par déplacement de phase (xPSK).

2. Dispositif de modulation par déplacement de phase (xPSK) selon la revendication 1, dans lequel le dispositif de modulation par déplacement de phase (xPSK) comprend également :
• une entrée secondaire (303) configurée pour recevoir au moins un autre signal modulé en phase (PMSj) ayant une longueur d'onde λⱼ différente de la longueur d'onde prédéterminée λᵢ ;
dans lequel
le multiplexeur (MUX) est en outre configuré pour recevoir et multiplexer l'autre signal modulé en phase (PMSj) avec tous les signaux déphasés (PSS1 à PSSx) avant d'envoyer le signal modulé en phase (PMS) multiplexé obtenu dans la sortie (301) du dispositif de modulation par déplacement de phase (xPSK).

3. Dispositif de modulation par déplacement de phase (xPSK) selon la revendication 2 dans lequel le débit (302) est en outre configuré pour recevoir et envoyer du dispositif de modulation par déplacement de phase (xPSK) le signal optique porteur non modulé résultant (R-NMC) obtenu après l'extraction de la longueur d'onde prédéterminée λᵢ par les résonateurs en anneau modulés (MRR).

4. Dispositif de modulation par déplacement de phase (xPSK) selon la revendication 3 dans lequel le multiplexeur (MUX) comprend :
• un coupleur (C) configuré pour recevoir et coupler tous les signaux déphasés (PSS1 à PSSx) obtenus après le déplacement de phase ; et
• un résonateur en anneau (RR) configuré pour recevoir et filtrer, à la longueur d'onde prédéterminée λᵢ, les signaux déphasés (PSS1 à PSSx) couplés et pour multiplexer les signaux déphasés (PSS1 à PSSx) couplés avec l'autre signal modulé en phase (PMSj) avant d'envoyer le signal modulé en phase (PMS) obtenu dans la sortie (301) du dispositif de modulation par déplacement de phase (xPSK).

5. Dispositif de modulation par déplacement de phase à longueurs d'onde multiples (M-xPSK) configuré pour moduler en phase, à M longueurs d'onde prédéterminées différentes les unes des autres, M étant un nombre entier supérieur ou égal à 2, un signal optique porteur non modulé (NMC) ayant N longueurs d'onde différentes, N étant un nombre entier supérieur ou égal à M, le dispositif de modulation par déplacement de phase à longueurs d'onde multiples (M-xPSK) comprenant :
• M dispositifs de modulation par déplacement de phase (xPSK) selon la revendication 4 ;
dans lequel,
le premier dispositif de modulation par déplacement de phase (xPSK_1) est configuré pour moduler en phase le signal optique porteur non modulé (NMC) à une longueur d'onde prédéterminée λ₁ ; et
dans lequel, pour un entier j compris entre 2 et M
le j^{ème} dispositif de modulation par déplacement de phase (xPSK_j) est configuré pour recevoir et moduler en phase, à une longueur d'onde prédéterminée λⱼ différente de λⱼ-λ₁, le signal optique porteur non modulé résultant (R-NMC) provenant du débit (302_j-1) du j-1^{ème} dispositif de modulation par déplacement de phase (xPSK_j-1),
le multiplexeur du j-1^{ème} dispositif de modulation par déplacement de phase (xPSK_j-1) est configuré pour recevoir et multiplexer le signal modulé en phase provenant de la sortie (301_j) du j^{ème} dispositif de modulation par déplacement de phase (xPSK_j) avec les signaux déphasés (PSSl_j-1 à PSSx_j-1) du j-1^{ème} dispositif de modulation par déplacement de phase (xPSK_j-1) avant d'envoyer le signal modulé en phase multiplexé obtenu dans la sortie (301_j-1) du j-1^{ème} dispositif de modulation par déplacement de phase (xPSK_j-1).

6. Émetteur optique ultra compact (UCOT) pour une télécommunication de données à haut débit, l'émetteur optique ultra compact (UCOT) étant configuré pour générer un signal optique (OS) ayant M longueurs d'onde différentes les unes des autres, M étant un nombre entier supérieur ou égal à 1, chaque longueur d'onde étant modulée en phase, l'émetteur optique ultra compact (UCOT) comprenant :
• une source laser (LS) configurée pour générer un premier signal optique porteur non modulé (NMCa) ayant N longueurs d'onde différentes, N étant un nombre entier supérieur ou égal à M ; et
• un premier dispositif de modulation par déplacement de phase à longueurs d'onde multiples (M-xPSKa) selon la revendication 5, le premier dispositif de modulation par déplacement de phase à longueurs d'onde multiples (M-xPSKa) étant configuré pour moduler en phase le signal optique porteur non modulé (NMCa) à M longueurs d'onde prédéterminées différentes les unes des autres,
dans lequel le signal optique (OS) correspond au signal modulé en phase (PMSa) à la sortie (301_1a) du premier dispositif de modulation par déplacement de phase (xPSK_1a) du premier dispositif de modulation par déplacement de phase à longueurs d'onde multiples (M-xPSKa).

7. Émetteur optique ultra compact (UCOT) selon la revendication 6, dans lequel la source laser (LS) est configurée pour générer un deuxième signal optique porteur non modulé (NMCb) similaire au premier signal optique porteur non modulé (NMCa) et dans lequel l'émetteur optique ultra compact (UCOT) comprend en outre :
• un deuxième dispositif de modulation par déplacement de phase à longueurs d'onde multiples (M-xPSKb) similaire au premier dispositif de modulation par déplacement de phase à longueurs d'onde multiples (M-xPSKa), dans lequel le premier dispositif de modulation par déplacement de phase à longueurs d'onde multiples (M-xPSKa) est configuré pour recevoir et moduler en phase le premier signal optique porteur non modulé (NMCa) à M longueurs d'onde prédéterminées différentes les unes des autres, et le deuxième dispositif de modulation par déplacement de phase à longueurs d'onde multiples (M-xPSKb) est configuré pour recevoir et moduler en phase le deuxième signal optique porteur non modulé (NMCb) à M longueurs d'onde prédéterminées différentes les unes des autres ; et
• un coupleur à double polarisation (DPC) configuré pour recevoir les signaux modulés en phase (PMSa, PMSb) obtenus à la sortie (301_1a et 301_&b) de premiers dispositifs de modulation par déplacement de phase (xPSK_1a, xPSK_1b) des premiers dispositif de modulation par déplacement de phase à longueurs d'onde multiples (M-xPSKa, M-xPSKb) et combiner les signaux modulés en phase (PMSa, PMSb) en un signal de multiplexage par répartition de la polarisation - PDM - de sorte que les signaux modulés en phase (PMSa, PMSb) aient une polarisation orthogonale à la sortie du coupleur à double polarisation (DPC),
dans lequel le signal optique (OS) correspond au signal PDM et chaque polarisation du signal signal optique (OS) est modulée en phase à M longueurs d'onde prédéterminées différentes les unes des autres.
